# EUROPÄISCHE PATENTSCHRIFT

(11) **EP 2 119 531 B1**
(45) Veröffentlichungstag und Bekanntmachung des Hinweises auf die Patenterteilung: **16.07.2014**
(21) Anmeldenummer: 09006527.7
(22) Anmeldetag: 14.05.2009
(51) Int. Cl.: F16P 1/06

(54) **Laserschutzeinrichtung**
Laser protection device
Dispositif de protection contre les radiations laser

(30) Priorität: 17.05.2008 DE 102008024068
(43) Veröffentlichungstag der Anmeldung: 18.11.2009
(73) Patentinhaber: Laservision GmbH & Co. KG, 90766 Fürth (DE)
(72) Erfinder: Fröhlich, Thomas, Dr., 91207 Lauf a.d. Pegnitz (DE); Bura, Peter, 73773 Aichwald (DE); Fiedler, Andreas, 91361 Pinzberg (DE)
(74) Vertreter: Rau, Albrecht

(56) Entgegenhaltungen:
- EP-A2- 0 321 965
- GB-A- 2 182 746

## Beschreibung

Die Erfindung betrifft eine Laserschutzeinrichtung mit einem Laserschutzfenster und einer Detektoreinheit zum Erfassen eines im Störungsfall auf das Laserschutzfenster auftreffenden Laserstrahls und zum Abschalten eines den Laserstrahl erzeugenden Lasers.

Laserschutzfenster werden derzeit beispielsweise als großflächige Sichtfenster für Laserlaboratorien oder als Kabinenfenster für Lasereinhausungen eingesetzt. Die Laserschutz(-Kabinen)fenster können aus einem Scheibenverbund aus einer hochabsorbierenden Mineralglasscheibe (= eigentliche Schutzscheibe) und einer weitgehend neutralen, d.h. den Laserstrahl wenig absorbierenden oder für den Laserstrahl sogar komplett transparenten, Trägerglasscheibe bestehen. Der Scheibenverbund verhindert das Herausfallen von Bruchstücken nach einem Brechen bzw. Splittern des Glases im Fall eines direkten Lasertreffers. Die Schutzwirkung selbst eines gesprungenen Sichtfensters bleibt damit weitgehend erhalten.

Laserschutzfenster aus Mineralglas finden z.B. Verwendung als Sichtfenster in automatischen oder Hand-Lasermaterialbearbeitungsstationen (Schweißen, Schneiden, Bohren) und erlauben eine visuelle Prozesskontrolle durch den Bediener, ohne dass eine Laserschutzbrille getragen werden muss. Derartige Laserschutzfenster werden auch in großflächige Laserschutzabschirmungen eingebaut.

Bei geringerer Laserbelastung ist es möglich, Sichtfenster auch aus absorbierendem Kunststoff in Geräteeinhausungen oder in Stellwänden zu verwenden. Hierzu gibt es verschiedene Materialien für unterschiedliche Wellenlängen und Applikationen.

Es sind auch schon Laserschutzeinrichtungen bekannt, bei denen das Laserschutz(-Kabinen)fenster mit einer Detektoreinheit versehen ist, wodurch im Falle einer Störung und insbesondere beim Auftreffen eines Laserstrahls auf das Laserschutzfenster der Laser abgeschaltet werden kann. Hierzu hat man versucht, in die Schutzscheibe mäanderförmige Drahtanordnungen einzubringen, oder es wurde ein thermisch vorgespanntes Einscheibensicherheitsglas verwendet.

Diese vorbekannten Laserschutzeinrichtungen funktionieren allerdings nicht hinreichend zuverlässig. Insbesondere ist es nicht möglich, eine definierte Ansprechschwelle vorzusehen, um unnötige Fehlauslösungen zu vermeiden.

Von der Norm EN 60825-4 wird gefordert, dass Laserschutzfenster bei ständig beobachteten Laser-Anlagen beim Auftreffen eines Laserstrahls eine Standzeit von 10 s (= Sekunden), bei teilbeobachteten Laser-Anlagen eine Standzeit von 100 s und bei unbeobachteten Laser-Anlagen eine Standzeit von 10.000 s aufweisen müssen.

Eine zufrieden stellend arbeitende Laserschutzeinrichtung zum Abschalten des Lasers muss dementsprechend Reaktionszeiten aufweisen, die ein Abschalten des Lasers auf jeden Fall vor Erreichen der genannten Standzeiten gewährleisten. Vorzugsweise sollte die Reaktionszeit im Mikrosekundenbereich liegen.

Dabei ist zu berücksichtigen, dass es beispielsweise 40 KW-Laser mit einem Strahldurchmesser von nur 1 mm gibt. Aufgrund der hierbei resultierenden extrem hohen Energiedichten wird der Bedarf für eine qualitativ hochwertige und zuverlässig funktionierende aktive Laserschutzeinrichtung offensichtlich, da bei einem Versagen der Laserschutzeinrichtung und einer folglichen Zerstörung des Laserschutzfensters mit erheblichen Gefahren zu rechnen wäre.

In der EP 0 321 965 B1 wird eine Laserschutzeinrichtung mit einem Laserschutzfenster und einer Detektoreinrichtung umfassend einen lichtempfindlichen Sensor beschrieben. Die Detektoreinrichtung ist zum Erfassen eines im Störfall auf das Laserschutzfenster auftreffenden Laserstrahls und zum Abschalten eines den Laserstrahl erzeugenden Lasergeräts ausgelegt. Der lichtempfindliche Sensor ist innerhalb einer in dem Laserschutzfenster vorgesehenen Ausnehmung angeordnet. Dadurch resultiert ein komplizierter Aufbau. Abgesehen von den Ausnehmungen zur Aufnahme der lichtempfindlichen Sensoren sind auch elektrische Leitungen zur Versorgung und Abfrage der Sensoren vorzusehen. Die Verlegung dieser Leitungen ist aufwendig. Außerdem können diese Leitungen ebenso wie die innerhalb des Laserschutzfensters angeordneten lichtempfindlichen Sensoren die Sicht durch das Laserschutzfenster beeinträchtigen.

Weiterhin wird in der EP 1 746 334 A2 eine Laserschutzeinrichtung in Gestalt einer Laserschutzwand zur Abschirmung eines Laserbereichs beschrieben. Diese Laserschutzeinrichtung ist doppelwandig ausgeführt. Innerhalb eines Zwischenraums zwischen den beiden Wänden erfolgt eine Strahlungsüberwachung. Die zugehörigen Sensoren sind im stirnseitigen Bereich der Wände angeordnet. Auch dieser Aufbau ist kompliziert. Außerdem ist diese Doppelwandanordnung nicht transparent, so dass nicht wie bei einem Laserschutzfenster durch sie hindurchgesehen werden kann.

Hiervon ausgehend liegt der Erfindung die Aufgabe zugrunde, eine Laserschutzeinrichtung der eingangs bezeichneten Art so auszugestalten, dass beim Auftreffen eines Laserstrahls im Störfall ein Abschalten des Lasers mit hoher Zuverlässigkeit und insbesondere kurzer Verzögerungszeit erreicht wird, ohne dabei die Eigenschaften während des Normalbetriebs zu beeinträchtigen.

Zur Lösung dieser Aufgabe wird eine Laserschutzeinrichtung entsprechend den Merkmalen des Anspruchs 1 angegeben. Bei der erfindungsgemäßen Laserschutzeinrichtung hat das Laserschutzfenster einen seitlich umlaufenden Fensterrand mit insbesondere schmalen Fensterstirnseiten. Es ist am seitlich umlaufenden Fensterrand mittels eines Rahmens abgedeckt. Weiterhin umfasst die Detektoreinheit wenigstens einen lichtempfindlichen Sensor, der an einer der Fensterstirnseiten und dort separiert von einem Umgebungslicht zwischen dem Rahmen und der Fensterstirnseite angeordnet ist, wobei der Rahmen das Umgebungslicht abhält. Der lichtempfindliche Sensor ist dazu ausgelegt, eine von dem auf das Laserschutzfenster auftreffenden Laserstrahl hervorgerufene und sich innerhalb des Laserschutzfensters in Richtung des Fensterrands, also insbesondere parallel zu einer Scheibenhauptfläche des Laserschutzfensters, ausbreitende Sekundärstrahlung zu erfassen. Außerdem ist die Detektoreinheit dazu ausgelegt, ein von dem lichtempfindlichen Sensor aufgrund einer erfassten Sekundärstrahlung erzeugtes Sensorsignal hinsichtlich einer Intensität oder einer Energiedichte des die Sekundärstrahlung hervorrufenden Laserstrahls auszuwerten.

Bei der erfindungsgemäßen Laserschutzeinrichtung bildet also das Laserschutzfenster selbst insbesondere eine Art flächigen Lichtwellenleiter für die Sekundärstrahlung, der die Sekundärstrahlung dem lichtempfindlichen Sensor zuführt. Mittels dieser Ausgestaltung wird erreicht, dass die durch den auftreffenden Laserstrahl bedingte Sekundärstrahlung bzw. -emission unabhängig vom konkreten Ort des Auftreffens sehr schnell zu dem lichtempfindlichen Sensor geleitet wird, um dort das Sensorsignal zu erzeugen, das in der Detektoreinheit auf Relevanz untersucht wird. Eine Abschaltung des Lasers wird insbesondere nur dann eingeleitet, wenn aufgrund des Sensorsignals erkannt wird, dass tatsächlich ein energiereicher Laserstrahl auf das Laserschutzfenster aufgetroffen ist. Die maßgebliche und vom Sensor detektierte Sekundärstrahlung wird insbesondere nur beim Auftreffen eines Laserstrahls induziert und emittiert. Folglich können durch normale (Tages- oder Raum-) Lichteinstrahlung bedingte Fehlauslösungen sicher vermieden werden. Die erfindungsgemäße Laserschutzeinrichtung ist sehr zuverlässig und vor allem auch störlichtunempfindlich.

Letzteres wird auch durch die Platzierung des Sensors zwischen dem Rahmen und der Fensterstirnseite begünstigt. Der insbesondere für den Laserstrahl, die Sekundärstrahlung und auch für Umgebungslicht undurchlässige Rahmen hält Umgebungslicht von dem Sensor ab. In den Sensor einfallendes Umgebungslicht würde ansonsten die Messempfindlichkeit reduzieren. Die erfindungsgemäße Laserschutzeinrichtung hat also insbesondere aufgrund der Abschottung des Sensors durch den Rahmen eine sehr hohe Messempfindlichkeit. Darüber hinaus dient der Rahmen auch der Sicherheit. Er verhindert umgekehrt auch, dass möglicherweise gefährliche (Sekundär-)Strahlung an den Fensterstirnseiten aus dem Laserschutzfenster austritt.

Weiterhin beeinträchtigt der an der Fensterstirnseite angeordnete Sensor die übrigen Funktionseigenschaften des Laserschutzfensters nicht. Insbesondere gestattet die unauffällige Platzierung am seitlichen Fensterrand einen ungestörten Blick durch das Laserschutzfenster. Elektrische Versorgungs- oder Abfrageleitungen des Sensors sind insbesondere unauffällig innerhalb des Rahmens verlegt. Dies und auch die Anordnung des Sensors am Fensterrand tragen zu dem einfachen und trotzdem sehr zuverlässigen Aufbau der erfindungsgemäßen Laserschutzeinrichtung bei.

Vorteilhafte Ausgestaltungen der erfindungsgemäßen Laserschutzeinrichtung ergeben sich aus den Merkmalen der von Anspruch 1 abhängigen Ansprüche.

Gemäß einer günstigen Ausgestaltung ist das Laserschutzfenster ein Scheibenverbund mit einer den Laserstrahl absorbierenden Schutzscheibe und einer parallel zur Schutzscheibe angeordneten zweiten Scheibe, wobei die zweite Scheibe den Laserstrahl weniger als die Schutzscheibe absorbiert und die Sekundärstrahlung zu dem lichtempfindlichen Sensor leitet. Insbesondere ist die zweite Scheibe für die Laserstrahlung sogar vollständig transparent. Weiterhin ist der lichtempfindliche Sensor insbesondere an der zweiten Scheibe angeordnet, d.h. er ist vorzugsweise mit einer lichtempfindlichen Empfangsfläche auf die Stirnseite der zweiten Scheibe ausgerichtet. Dies ist günstig, da sich die Sekundärstrahlung überwiegend in dieser zweite Scheibe ausbreitet, wohingegen in der Schutzscheibe aufgrund der dort absichtlich sehr hoch gewählten Absorption kaum eine Ausbreitung von (Licht-)Strahlung statt findet. Ein Scheibenverbund bietet darüber hinaus eine große mechanische Stabilität. Außerdem kann jede Scheibe hinsichtlich einer anderen spezifischen Funktion gezielt ausgelegt werden. Grundsätzlich kann das Laserschutzfenster aber auch nur aus einer einzigen Scheibe bestehen.

Gemäß einer weiteren günstigen Ausgestaltung ist bei einem Scheibenverbund die Schutzscheibe auf einer Außenseite des Scheibenverbunds, d.h. insbesondere auf der von der Seite des Laserstrahleintritts in das Laserschutzfenster abgewandten Seite des Laserschutzfensters, und die zweite Scheibe auf einer Innenseite des Scheibenverbunds angeordnet. Weiterhin hat die zweite Scheibe einen Brechungsindex, der vorzugsweise im Bereich zwischen 1,4 und 1,6 liegt, und der insbesondere so gewählt ist, dass von außen einfallendes sichtbares Licht aufgrund von Totalreflektion nicht an den lichtempfindlichen Sensor geführt wird. Ein von innen auftreffender Laserstrahl bzw. die von ihm hervorgerufene Sekundärstrahlung wird dagegen wenigstens teilweise zu den mit dem lichtempfindlichen Sensor versehenen Fensterrand abgelenkt bzw. geleitet. So werden die Zuverlässigkeit und die Störlichtunempfindlichkeit weiter gesteigert.

Gemäß einer weiteren günstigen Ausgestaltung hat die Sekundärstrahlung die gleiche Wellenlänge hat wie der Laserstrahl. Sie wird außerdem insbesondere aufgrund von Streueffekten an einer sich in dem Laserschutzfenster bildenden Defektstelle hervorgerufen. Der Laserstrahl wird in aller Regel entweder senkrecht oder mit einem gegenüber der Scheibennormalen kaum geneigten Einfallswinkel auf das Laserschutzfenster auftreffen. Damit ist eine Umlenkung dieser auftreffenden Laserstrahlung in eine im Wesentlichen innerhalb der Hauptebene des Laserschutzfensters verlaufende Ausbreitungsrichtung vorzugsweise mittels Streuzentren zu erreichen. Als solche kann insbesondere die Defektstelle dienen, zu der es aufgrund der hochenergetischen Laserstrahlung kommt. Bei dieser Ausführungsform ist der Sensor also bevorzugt in einem Wellenbereich empfindlich, der die Wellenlänge der Laserstrahlung zumindest auch mit umfasst.

Gemäß einer weiteren günstigen Ausgestaltung hat die Sekundärstrahlung eine andere Wellenlänge als der Laserstrahl. Bei dieser Variante kann neben dem Scheibenverbund vorzugsweise auch ein Laserschutzfenster aus einer einzigen Scheibe zum Einsatz kommen. Aufgrund der unterschiedlichen Wellenlängen ist eine Lichtführung der Sekundärstrahlung und insbesondere eine Zuführung zu dem lichtempfindlichen Sensor auch so gegeben. Eine Absorption erfolgt dann vorzugsweise nur bei der Wellenlänge des Laserstrahls, nicht aber bei der der Sekundärstrahlung.

Gemäß einer weiteren günstigen Ausgestaltung ist die Sekundärstrahlung eine aufgrund des Laserstrahls hervorgerufene Wärmestrahlung oder ein aufgrund des Laserstrahls hervorgerufenes Prozessleuchten. Eine derartige Wärmestrahlung bzw. ein derartiges Prozessleuchten bildet sich automatisch bei der Wechselwirkung des aufgetroffenen Laserstrahls mit dem Laserschutzfenster aus. Die Lichtempfindlichkeit des Sensors ist dann genau auf diese vorab bekannte Strahlungsart ausgelegt. So resultiert ein besonders einfacher Aufbau.

Gemäß einer weiteren günstigen Ausgestaltung besteht das Laserschutzfenster aus einem Material, in dem ein fluoreszierender oder phosphorisierender Zusatz enthalten ist. Dann ruft der Laserstrahl als Sekundärstrahlung vorteilhafterweise eine Lumineszenzstrahlung hervor, also insbesondere eine Fluoreszenz- bzw. Phosphoreszenzstrahlung. Eine solche Lumineszenzstrahlung lässt sich sehr gut detektieren. Außerdem entsteht sie nicht richtungsgebunden, so dass ohne Zusatzaufwand auch ein Lumineszenzlichtanteil enthalten sein wird, der sich in die gewünschte Richtung, nämlich auf den Fensterrand zu, ausbreitet.

Gemäß einer weiteren günstigen Ausgestaltung ist der lichtempfindliche Sensor in einem freien Zwischenraum zwischen dem Rahmen und der Fensterstirnseite angeordnet. Dies ist eine besonders einfache und damit sehr (preis)günstige Platzierung des Sensors, die außerdem auch die gewünschte Detektion der Sekundärstrahlung problemlos ermöglicht.

Gemäß einer weiteren günstigen Ausgestaltung sind mehrere am seitlich umlaufenden Fensterrand insbesondere gleichmäßig verteilt angeordnete lichtempfindliche Sensoren vorgesehen. Diese Sensoren sind dann vorzugsweise mit einem Abstand von jeweils 10 bis 30 cm, insbesondere von jeweils etwa 20 cm, voneinander angeordnet. Damit ist eine exaktere Erfassung der Sekundärstrahlung möglich. Je enger das Netz der am Fensterrand platzierten Sensoren ist, umso geringer ist die Wahrscheinlichkeit, dass eine relevante, aber sich in nur einem begrenzten Richtungssektor ausbreitende Sekundärstrahlung unerfasst bleibt.

Gemäß einer weiteren günstigen Ausgestaltung ist dem lichtempfindlichen Sensor eine Auswerteeinheit mit einem Diskriminator nachgeordnet, wobei der Diskriminator zur Überprüfung, ob eine insbesondere einstellbare Signalschwelle überschritten ist, ausgelegt ist. Damit wird sicher gestellt, dass eine Abschaltung des Lasers nur erfolgt, wenn die Signalschwelle überschritten ist und damit tatsächlich ein Störfall vorliegt. Mittels entsprechender Wahl der Signalschwelle lässt sich die Ansprechempfindlichkeit der Laserschutzeinrichtung sehr gut und effizient einstellen. Fehlauslösungen können so vermieden werden.

Die Erfindung betrifft neben der Laserschutzeinrichtung an sich auch ein Verfahren, mittels dessen eine derartige Laserschutzeinrichtung betrieben wird oder mittels dessen ein auf ein Laserschutzfenster auftreffender Laserstrahl erfasst und insbesondere ausgewertet wird, um den Laser in Abhängigkeit von den Ergebnissen dieser Auswertung bei Bedarf abzuschalten.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel einer Laserschutzeinrichtung, die bei Auftreffen eines Laserstrahls auf ein Laserschutzfenster den Laser abschaltet,
- Fig. 2: ein erstes Ausführungsbeispiel eines einscheibigen Laserschutzfensters für eine Laserschutzeinrichtung gemäß Fig. 1,
- Fig. 3: ein zweites Ausführungsbeispiel eines zweischeibigen Laserschutzfensters für eine Laserschutzeinrichtung gemäß Fig. 1,
- Fig. 4: ein Ausführungsbeispiel einer bei der Laserschutzeinrichtung gemäß Fig. 1 vorgesehenen Detektoreinheit für eine in dem Laserschutzfenster induzierte Sekundärstrahlung, und
- Fig. 5: ein weiteres Ausführungsbeispiel einer bei der Laserschutzeinrichtung gemäß Fig. 1 vorgesehenen Detektoreinheit mit mehreren in Reihe geschalteten Detektorsubeinheiten.

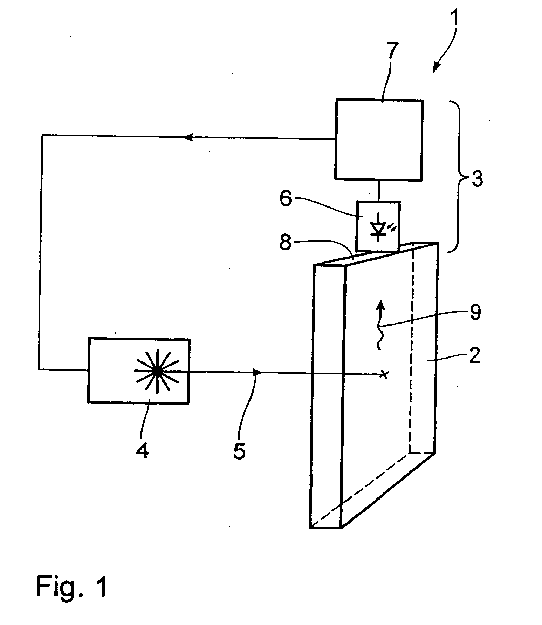

Einander entsprechende Teile sind in Fig. 1 bis 5 mit denselben Bezugszeichen versehen.

In Fig. 1 ist ein Ausführungsbeispiel einer Laserschutzeinrichtung 1 gezeigt. Sie umfasst ein als Sichtfenster ausgebildetes Laserschutzfenster 2 sowie eine Detektoreinheit 3. Bei dem Laserschutzfenster 2 kann es sich beispielsweise um ein Kabinenfenster einer nicht näher gezeigten Kabine handeln, innerhalb derer ein Laser 4 angeordnet ist. Ein von dem Laser 4 erzeugter Laserstrahl 5 dient während des normalen Betriebszustands einem innerhalb der Kabine durchgeführten Bearbeitungsprozess. Dieser Bearbeitungsprozess kann weitgehend beliebiger Natur sein. Im ungestörten Betriebszustand breitet sich der Laserstrahl 5 ausschließlich innerhalb der nicht näher gezeigten Kabine aus. Lediglich in einem Störfall, wie er in Fig. 1 angedeutet ist, trifft der Laserstrahl 5 auf das Laserschutzfenster 2 auf. Die Laserschutzeinrichtung 1 ist so ausgelegt, dass sie diesen Störfall automatisch erkennt und den Laser 4 mit einer kurzen Reaktionszeit abschaltet, um eine Zerstörung des Laserschutzfensters 2 und damit ein Austreten des Laserstrahls 4 in den Raum außerhalb der Kabine zu verhindern. Dort könnte der Laserstrahl 5 weiteren Schaden anrichten und insbesondere auch das Bedienpersonal gefährden.

Die Detektoreinheit 3 setzt sich aus mindestens einem lichtempfindlichen Sensor 6, beispielsweise einer Fotodiode auf Silizium- oder Germanium-Basis, sowie einer dem Sensor 6 nachgeordneten Auswerte- und Steuereinheit 7 zusammen. Letztere ist mittels einer Steuerleitung bzw. eines nicht näher gezeigten Steuerkreises, beispielsweise eines Interlock-Kreises, an den Laser 4 angeschlossen, um den Laser 4 bei Bedarf abzuschalten. Der lichtempfindliche Sensor 6 ist an einer Stirnseite 8 (= schmale Stirnkante) des Laserschutzfensters 2 angeordnet.

Trifft der Laserstrahl 5 in einem Störfall auf das Laserschutzfenster 2 auf, generiert er eine Sekundärstrahlung 9, die sich unter anderem auch in Richtung des lichtempfindlichen Sensors 6 ausbreitet. Die Ausbreitung erfolgt dabei im Wesentlichen im Inneren des Laserschutzfensters 2 und in Richtungen, die innerhalb einer Fensterhauptebene des Laserschutzfensters 2 liegen. Die Führung innerhalb des Laserschutzfensters 2 kann dabei auch durch Mehrfachreflexionen an den einander gegenüberliegenden Hauptoberflächen einer Scheibe des Laserschutzfensters 2 erfolgen. Das Laserschutzfenster 2 bildet einen flächigen Lichtwellenleiter.

Die Laserschutzeinrichtung 1 kann aufgrund der steuernden Beeinflussung, insbesondere einer Abschaltung, des Lasers 4 auch als aktives (Laserschutz-)Kabinenfenster bezeichnet werden. Das hier beschriebene Wirkungsprinzip lässt sich grundsätzlich auch auf nichttransparente Wandbereiche der Laserkabine übertragen, solange diese Wandbereiche eine lichtleitende Funktion für die von dem auftreffenden Laserstrahl 5 induzierte Sekundärstrahlung 9 aufweisen. Der Begriff "Laserschutzfenster" ist somit auch in diesem Sinn zu verstehen.

Bezüglich des Lasers 4 sind viele verschiedene Ausführungsformen möglich. Insbesondere ist der komplette technisch realisierbare Wellenlängenbereich möglich. Der Laserstrahl 5 kann also eine Wellenlänge aus einem sehr weiten Wellenlängenspektrum, das sich vorzugsweise vom infraroten bis zum ultravioletten Bereich erstreckt, haben. Ähnliches gilt für den lichtempfindlichen Sensor 6. Auch dessen Empfindlichkeitsbereich kann je nach Anwendungsfall in dem bestmöglichen Wellenlängenteilbereich angesiedelt sein. Die Wellenlängenempfindlichkeit des Sensors 6 ist dabei auf den Wellenlängengehalt bzw. die Schwerpunktwellenlängen der Sekundärstrahlung 9 abgestimmt. Je nach Anwendungsfall können der Laserstrahl 5 und die von ihm induzierte Sekundärstrahlung 9 entweder gleiche oder auch unterschiedliche Wellenlängen(bereiche) aufweisen.

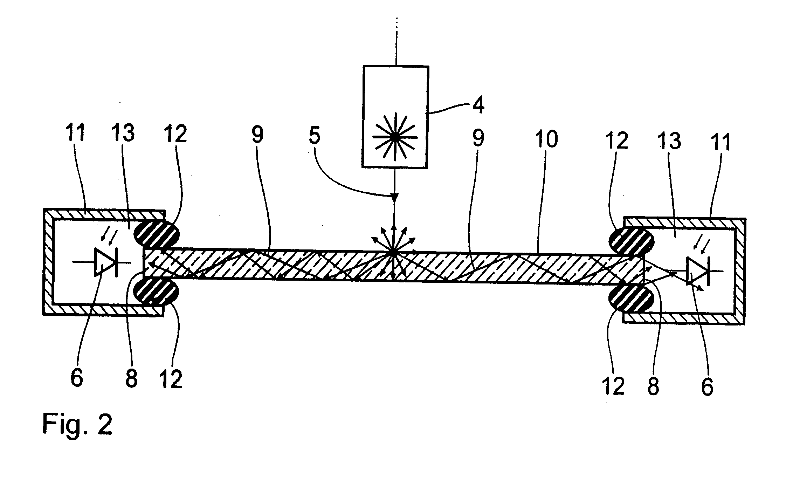

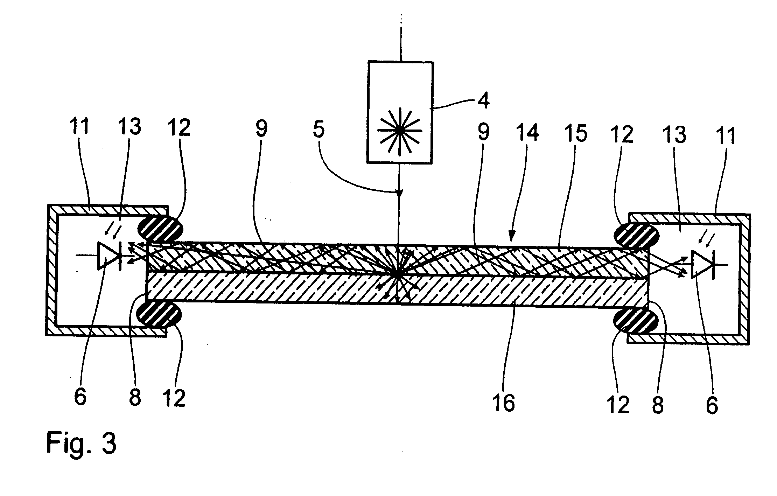

Für das Laserschutzfenster 2 gibt es verschiedene Ausführungsvarianten. Zwei davon sind in Fig. 2 und 3 näher dargestellt.

Bei dem in Fig. 2 gezeigten ersten Ausführungsbeispiel eines Laserschutzfensters 10 ist nur eine einzige Scheibe vorgesehen. Diese dient sowohl der Absorption eines gegebenenfalls auftreffenden Laserstrahls 5 als auch zur Leitung einer durch den Laserstrahl 5 hervorgerufenen Sekundärstrahlung 9. Die einzige Scheibe des Laserschutzfensters 10 ist hoch absorbierend für die Laserstrahlung 5 ausgelegt. Dies bedeutet, dass im Wellenlängenbereich des Laserstrahls 5 eine Resttransmission von höchstens 10⁻⁴ gegeben ist.

An der Wechselwirkungsstelle, an der der Laserstrahl 5 auf die auf das Laserschutzfenster 10 auftrifft, kommt es zur Generierung der Sekundärstrahlung, die sich dann in Richtung der an den Stirnseiten 8 angeordneten Sensoren 6 im Inneren des Laserschutzfensters 10 ausbreitet. Diese Ausbreitung erfolgt insbesondere auch aufgrund einer ein- oder mehrfachen Totalreflexion an der Scheibenoberseite und Scheibenunterseite. Die Sekundärstrahlung 9 kann auf unterschiedliche Weise hervorgerufen werden. Eine erste Möglichkeit besteht darin, dass es sich bei der Sekundärstrahlung 9 um eine Wärmestrahlung handelt, die im Zusammenhang mit der Absorption des Laserstrahls 5 in dem Laserschutzfenster 10 generiert wird. Weiterhin kann die Sekundärstrahlung 9 auch die Strahlung des Prozessleuchtens sein, das beim Auftreffen des Laserstrahls 5 auf dem Laserschutzfenster 10 entsteht. Bei einer dritten Variante können dem Material des Laserschutzfensters 10 fluoreszierende oder phosphorisierende Bestandteile zugesetzt sein, die bei einem Beschuss durch den Laserstrahl 5 zu einer Lumineszenzstrahlung, also insbesondere einer Fluoreszenz- bzw. Phosphoreszenz-Strahlung, angeregt werden. Bei dieser zuletzt genannten Option ist die Sekundärstrahlung 9 also eine Lumineszenzstrahlung. Bei diesen vorstehend genannten drei Varianten haben der Laserstrahl 5 und die Sekundärstrahlung 9 jeweils eine unterschiedliche Wellenlänge.

Das Laserschutzfenster 10 ist im Bereich der Stirnseiten 8 mittels eines Rahmens 11 abgedeckt. Der Rahmen 11 hat einen U-förmigen Querschnitt. Er umfasst mit seinen beiden U-Schenkeln das Laserschutzfenster 10 an dessen seitlichen Rändern ein Stück weit. Zwischen den U-Schenkeln des Rahmens 11 und dem Laserschutzfenster 10 ist ein Dichtungsmaterial 12 angeordnet. In einem Zwischenraum 13, der zwischen dem U-Boden des Rahmens 11 und der jeweiligen Stirnseite 8 des Laserschutzfensters 10 gebildet ist, befinden sich die lichtempfindlichen Sensoren 6, von denen bei dem Ausführungsbeispiel gemäß Fig. 2 mehrere vorgesehen sind. Der Rahmen 11 ist licht- bzw. strahlungsundurchlässig. Insbesondere kann ihn weder der Laserstrahl 5 noch die Sekundärstrahlung 9 noch normales Umgebungslicht passieren.

Das in Fig. 3 gezeigte Ausführungsbeispiel unterscheidet sich von dem gemäß Fig. 2 nur in dem Aufbau des Laserschutzfensters 14, das als Scheibenverbund aus einer innen liegenden Trägerglasscheibe 15 und einer außen liegenden absorbierenden Schutzscheibe 16 gebildet ist. Die Lichtführung der Sekundärstrahlung 9 erfolgt in der innen liegenden neutralen Trägerglasscheibe 15, die für den Laserstrahl 5 im Wesentlichen transparent ist. Jedenfalls bewirkt die Trägerglasscheibe 15 keine nennenswerte Absorption des Laserstrahls 5. Zu einer solchen Absorption kommt es erst in der außen liegenden Schutzscheibe 16. Die Wechselwirkungsstelle, an der die Sekundärstrahlung 9 generiert wird, liegt insbesondere im Bereich der Kontaktfläche zwischen der Trägerglasscheibe 15 und der Schutzscheibe 16.

Auch bei diesem Ausführungsbeispiel kann die Sekundärstrahlung 9 die drei im Zusammenhang mit dem Ausführungsbeispiel gemäß Fig. 2 beschriebenen Strahlungsarten annehmen. Darüber hinaus ist aber eine vierte Strahlungsart möglich. Die Sekundärstrahlung 9 kann bei diesem Ausführungsbeispiel nämlich auch eine Streustrahlung des Laserstrahls 5 sein. Im Bereich der Wechselwirkungsstelle kann es aufgrund der hohen Energiedichte des Laserstrahls 5 zu einer Materialschädigung und infolge dessen zur Ausbildung von Streuzentren kommen, an denen der Laserstrahl 5 in alle Raumrichtungen gestreut wird. Ein Teil dieser gestreuten Laserstrahlung 5 wird dabei als Sekundärstrahlung 9 in die Trägerglasscheibe 15 eingekoppelt und breitet sich in Richtung der Stirnseiten 8 und der dort angeordneten lichtempfindlichen Sensoren 6 aus. Die Sensoren 6 sind mit ihrer lichtempfindlichen Empfangsfläche auf die Trägerglasscheibe 15, insbesondere auf deren Stirnseite, ausgerichtet, da die Sekundärstrahlung 9 an dieser Stirnseite separiert vom Umgebungslicht austritt. Diese vorteilhafte Separierung vom Umgebungslicht erfolgt aufgrund des Rahmens 11, innerhalb dessen die Sensoren platziert sind und der das die Empfangsempfindlichkeit ansonsten u.U. reduzierende Umgebungslicht abhält.

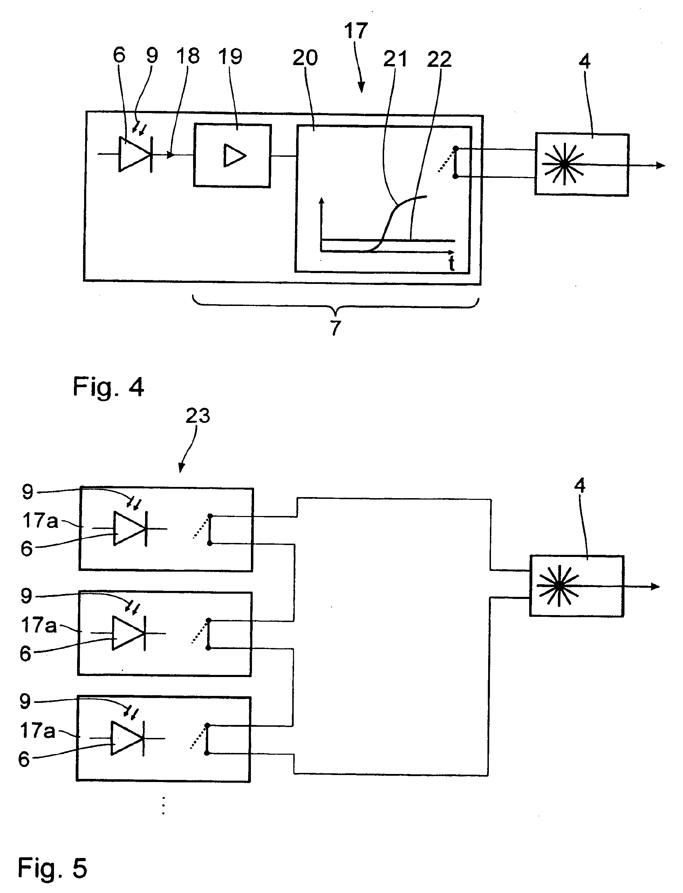

In Fig. 4 und 5 sind Ausführungsbeispiele für Detektoreinheiten 3 der Laserschutzeinrichtung 1 dargestellt.

In Fig. 4 ist eine Detektoreinheit 17 für eine einzige Erfassungsstelle gezeigt. Sie umfasst neben dem Sensor 6, der aus der erfassten Sekundärstrahlung 9 ein elektrisches Sensorsignal 18 erzeugt, einen an den Sensor 6 angeschlossenen Verstärker 19 sowie einen an den Verstärker 19 angeschlossenen Diskriminator 20. In dem Diskriminator 20 wird laufend überwacht, ob das verstärkte Sensorsignal 21 über einer vorgebbaren Signalschwelle 22 liegt. Ist dies der Fall, gibt der Diskriminator 20 an seinem Ausgang einen Steuerbefehl aus, woraufhin der Laser 4 abgeschaltet wird.

Eine in Fig. 5 gezeigte Detektoreinheit 23 ist für mehrere Erfassungsstellen ausgelegt. Sie enthält als Detektorsubeinheiten 17a dementsprechend mehrere Detektoreinheiten 17 gemäß Fig. 4. Die Ausgänge dieser Detektorsubeinheiten 17a sind beim Ausführungsbeispiel gemäß Fig. 5 in Reihe geschaltet, so dass der Laser 4 abgeschaltet wird, wenn in einer der Detektorsubeinheiten 17a eine zu hohe Sekundärstrahlung 9 erfasst und dementsprechend das Vorliegen eines gefährlichen Störfalls erkannt wird.

## Patentansprüche

1. Laserschutzeinrichtung mit einem Laserschutzfenster (2; 10; 14) und einer Detektoreinheit (3; 17; 23) zum Erfassen eines im Störungsfall auf das Laserschutzfenster (2; 10; 14) auftreffenden Laserstrahls (5) und zum Abschalten eines den Laserstrahl (5) erzeugenden Lasers (4), **dadurch gekennzeichnet, dass**
a) das Laserschutzfenster (2; 10; 14) einen seitlich umlaufenden Fensterrand mit Fensterstimseiten (8) hat und am seitlich umlaufenden Fensterrand mittels eines Rahmens (11) abgedeckt ist,
b) die Detektoreinheit (3; 17; 23) wenigstens einen lichtempfindlichen Sensor (6) umfasst, der an einer der Fensterstimseiten (8) und dort separiert von einem Umgebungslicht zwischen dem Rahmen (11) und der Fensterstimseite (8) angeordnet ist, wobei der Rahmen (11) das Umgebungslicht abhält, und der dazu ausgelegt ist, eine von dem auf das Laserschutzfenster (2; 10; 14) auftreffenden Laserstrahl (5) hervorgerufene und sich innerhalb des Laserschutzfensters (2; 10; 14) in Richtung des Fensterrands ausbreitende Sekundärstrahlung (9) zu erfassen, und
c) die Detektoreinheit (3; 17; 23) dazu ausgelegt ist, ein von dem lichtempfindlichen Sensor (6) aufgrund einer erfassten Sekundärstrahlung (9) erzeugtes Sensorsignal (18) hinsichtlich einer Intensität oder einer Energiedichte des die Sekundärstrahlung (9) hervorrufenden Laserstrahls (5) auszuwerten.

2. Laserschutzeinrichtung nach Anspruch 1, **dadurch gekennzeichnet, dass** das Laserschutzfenster (14) ein Scheibenverbund mit einer den Laserstrahl (5) absorbierenden Schutzscheibe (16) und einer parallel zur Schutzscheibe (16) angeordneten zweiten Scheibe (15) ist, wobei die zweite Scheibe (15) den Laserstrahl (5) weniger als die Schutzscheibe (16) absorbiert und die Sekundärstrahlung (9) zu dem lichtempfindlichen Sensor (6) führt, und wobei der lichtempfindliche Sensor (6) insbesondere an der zweiten Scheibe (15) angeordnet ist.

3. Laserschutzeinrichtung nach Anspruch 1 oder 2 mit einem einen Laserstrahl erzeugenden Laser, **dadurch gekennzeichnet, dass** die Sekundärstrahlung (9) die gleiche Wellenlänge hat wie der Laserstrahl (5) und insbesondere aufgrund von Streueffekten an einer sich in dem Laserschutzfenster (2; 10; 14) bildenden Defektstelle hervorgerufen wird.

4. Laserschutzeinrichtung nach einem der vorhergehenden Ansprüche mit einem einen Laserstrahl erzeugenden Laser, **dadurch gekennzeichnet, dass** die Sekundärstrahlung (9) eine andere Wellenlänge hat als der Laserstrahl (5).

5. Laserschutzeinrichtung nach einem der vorhergehenden Ansprüche, **dadurch gekennzeichnet, dass** die Sekundärstrahlung (9) eine aufgrund des Laserstrahls (5) hervorgerufene Wärmestrahlung oder ein aufgrund des Laserstrahls (5) hervorgerufenes Prozessleuchten ist.

6. Laserschutzeinrichtung nach einem der vorhergehenden Ansprüche, **dadurch gekennzeichnet, dass** das Laserschutzfenster (2; 10; 14) aus einem Material besteht, in dem ein fluoreszierender oder phosphorisierender Zusatz enthalten ist.

7. Laserschutzeinrichtung nach einem der vorhergehenden Ansprüche, **dadurch gekennzeichnet, dass** der lichtempfindliche Sensor (6) in einem freien Zwischenraum (13) zwischen dem Rahmen (11) und der Fensterstimseite (8) angeordnet ist.

8. Laserschutzeinrichtung nach einem der vorhergehenden Ansprüche, **dadurch gekennzeichnet, dass** mehrere am seitlich umlaufenden Fensterrand insbesondere gleichmäßig verteilt angeordnete lichtempfindliche Sensoren (6) vorgesehen sind.

9. Laserschutzeinrichtung nach einem der vorhergehenden Ansprüche, **dadurch gekennzeichnet, dass** dem lichtempfindlichen Sensor (6) eine Auswerteeinheit (7) mit einem Diskriminator (20) nachgeordnet ist, wobei der Diskriminator (20) zur Überprüfung, ob eine insbesondere einstellbare Signalschwelle (22) überschritten ist, ausgelegt ist.

## Claims

1. Laser protection device comprising a laser protection window (2; 10; 14) and a detector unit (3; 17; 23) for detecting a laser beam (5) impinging on the laser protection window (2; 10; 14) in the event of an incident and for switching off a laser (4) which generates the laser beam (5), **characterized in that**
a) the laser protection window (2; 10; 14) has a laterally surrounding window edge comprising window front sides (8), wherein the laterally surrounding window edge is covered by means of a frame (11);
b) the detector unit (3; 17; 23) comprises at least one light-sensitive sensor (6) which is arranged at one of the window front sides (8) between the frame (11) and the window front side (8) so as to be separated from an ambient light, wherein the frame (11) keeps off the ambient light, and wherein the light-sensitive sensor (6) is configured such as to detect a secondary radiation (9) which is generated by the laser beam (5) impinging on the laser protection window (2; 10; 14) and propagates inside the laser protection window (2; 10; 14) in the direction of the window edge; and
c) the detector unit (3; 17; 23) is configured such as to evaluate a sensor signal (18) generated by the light-sensitive sensor (6) as a result of a detected secondary radiation (9) in terms of an intensity or an energy density of the laser beam (5) which generates the secondary radiation (9).

2. Laser protection device according to claim 1, **characterized in that** the laser protection window (14) is a laminated glass unit comprising a safety screen (16) which absorbs the laser beam (15) and a second screen (15) arranged parallel to the safety screen (16), wherein the second screen (15) absorbs less of the laser beam (5) than the safety screen (16) and guides the secondary radiation (9) to the light-sensitive sensor (6), and wherein the light-sensitive sensor (6) is in particular arranged at the second screen (15).

3. Laser protection device according to claim 1 or 2, comprising a laser which generates a laser beam, **characterized in that** the secondary radiation (9) has the same wavelength as the laser beam (5) and is in particular caused by scattering effects at a defective spot forming in the laser protection window (2; 10; 14).

4. Laser protection device according to one of the preceding claims, comprising a laser which generates a laser beam, **characterized in that** the secondary radiation (9) has a wavelength different from that of the laser beam (5).

5. Laser protection device according to one of the preceding claims, **characterized in that** the secondary radiation (9) is a thermal radiation caused by the laser beam (5) or a process light caused by the laser beam (5).

6. Laser protection device according to one of the preceding claims, **characterized in that** the laser protection window (2; 10; 14) consists of a material which contains a fluorescent or phosphorescent additive.

7. Laser protection device according to one of the preceding claims, **characterized in that** the light-sensitive sensor (6) is arranged in a free intermediate space (13) between the frame (11) and the window front side (8).

8. Laser protection device according to one of the preceding claims, **characterized in that** the laterally surrounding window edge is provided with several light-sensitive sensors (6) which are in particular arranged in such a way as to be evenly distributed.

9. Laser protection device according to one of the preceding claims, **characterized in that** an evaluation unit (7) comprising a discriminator (20) is arranged downstream of the light-sensitive sensor (6), wherein the discriminator (20) is configured to check whether an in particular adjustable signal threshold (22) has been exceeded.

## Revendications

1. Dispositif de protection contre les radiations laser comprenant une fenêtre (2 ; 10 ; 14) de protection contre les radiations laser et une unité de détection (3 ; 17 ; 23) pour la détermination d'un rayonnement (5) laser tombant sur la fenêtre (2 ; 10 ; 14) de protection contre les radiations laser en cas de dérangement et pour la mise hors service d'un laser (4) engendrant le rayonnement (5) laser,
**caractérisé en ce que**
a) la fenêtre (2 ; 10 ; 14) de protection contre les radiations laser possède un rebord de fenêtre latéral en parcourant le périmètre comprenant des faces frontales (8) de fenêtre et est recouverte au moyen d'un cadre (11) parcourant latéralement le périmètre du rebord de la fenêtre,
b) l'unité de détection (3 ; 17 ; 23) comprend au moins un capteur (6) photosensible qui est disposé sur l'une des faces frontales (8) de la fenêtre et y est séparé de la lumière environnante entre le cadre (11) et la face frontale (8) de la fenêtre, le cadre (11) arrêtant la lumière environnante et étant présent pour capturer un rayonnement secondaire (9) dû à un rayonnement (5) laser tombant sur la fenêtre (2 ; 10 ; 14) de protection contre les radiations laser et se répandant à l'intérieur de la fenêtre (2 ; 10 ; 14) de protection contre les radiations laser en direction du rebord de la fenêtre, et
c) l'unité de détection (3 ; 17 ; 23) est conçue pour traiter un signal (18) de capteur généré par le capteur (6) photosensible en raison d'un rayonnement secondaire (9) déterminé au niveau de l'intensité ou de la densité d'énergie du rayonnement (5) laser provoquant le rayonnement secondaire (9).

2. Dispositif de protection contre les radiations laser selon la revendication 1, **caractérisé en ce que** la fenêtre (14) de protection contre les radiations laser est une vitre composite comprenant une vitre de protection (16) absorbant le rayonnement (5) laser et une deuxième vitre (15) disposée parallèlement à la vitre de protection (16), la deuxième vitre (15) absorbant moins le rayonnement (5) laser que la vitre de protection (16) et conduisant le rayonnement secondaire (9) vers le capteur (6) photosensible, et le capteur (6) photosensible étant en particulier disposé sur la deuxième vitre (15).

3. Dispositif de protection contre les radiations laser selon les revendications 1 ou 2, comprenant un laser engendrant un rayonnement laser, **caractérisé en ce que** le rayonnement secondaire (9) possède la même longueur d'onde que le rayonnement (5) laser et en particulier, est provoqué en raison d'effets de dispersion créés à l'endroit d'un défaut se formant dans la fenêtre (2 ; 10 ; 14) de protection contre les radiations laser.

4. Dispositif de protection contre les radiations laser selon l'une des revendications précédentes, comprenant un laser engendrant un rayonnement laser, **caractérisé en ce que** le rayonnement secondaire (9) possède une longueur d'onde différente du rayonnement (5) laser.

5. Dispositif de protection contre les radiations laser selon l'une des revendications précédentes, **caractérisé en ce que** le rayonnement secondaire (9) est un rayonnement de chaleur généré en raison du rayonnement (5) laser ou un éclairage pour procédé généré en raison du rayonnement (5) laser.

6. Dispositif de protection contre les radiations laser selon l'une des revendications précédentes, **caractérisé en ce que** la fenêtre (2 ; 10 ; 14) de protection contre les radiations laser est constituée d'un matériau dans lequel est contenu un additif fluorescent ou phosphorescent.

7. Dispositif de protection contre les radiations laser selon l'une des revendications précédentes, **caractérisé en ce que** le capteur (6) photosensible est disposé dans une chambre intermédiaire (13) libre entre le cadre (11) et la face frontale (8) de la fenêtre.

8. Dispositif de protection contre les radiations laser selon l'une des revendications précédentes, **caractérisé en ce que** plusieurs capteurs (6) photosensibles disposés à côté du rebord de la fenêtre parcourant le périmètre, notamment distribués de manière régulière, sont prévus.

9. Dispositif de protection contre les radiations laser selon l'une des revendications précédentes, **caractérisé en ce qu'**une unité de traitement (7), comprenant un discriminateur (20), est disposée après le capteur (6) photosensible, le discriminateur (20) étant mis en oeuvre pour le contrôle, en particulier, lorsqu'un signal limite (22) pouvant être réglé est dépassé.
